(19) Europäisches Patentamt
European Patent Office
Office européen des brevets

(11) **EP 4 202 081 A2**

(12) **DEMANDE DE BREVET EUROPEEN**

(43) Date de publication:
**28.06.2023 Bulletin 2023/26**

(21) Numéro de dépôt: **22215094.8**

(22) Date de dépôt: **20.12.2022**

(51) Classification Internationale des Brevets (IPC):
**C25B 1/04** *(2021.01)*     **C25B 9/67** *(2021.01)*
**C25B 15/021** *(2021.01)*     **C25B 15/08** *(2006.01)*
**C01B 3/00** *(2006.01)*

(52) Classification Coopérative des Brevets (CPC):
**C25B 1/04; C01B 3/0031; C25B 9/67;**
**C25B 15/021; C25B 15/08**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **21.12.2021 FR 2114165**

(71) Demandeur: **Electricité de France**
**75008 Paris (FR)**

(72) Inventeurs:
• **JEANMOUGIN, Antoine**
  **76133 KARLSRUHE (DE)**
• **COLOMAR, David**
  **67500 HAGUENAU (FR)**

(74) Mandataire: **Regimbeau**
  **20, rue de Chazelles**
  **75847 Paris Cedex 17 (FR)**

(54) **SYSTÈME COMBINÉ DE PRODUCTION ET DE COMPRESSION DU DIHYDROGÈNE**

(57)     L'invention concerne un système combiné de production et de compression de dihydrogène comprenant :
- un électrolyseur configuré pour produire du dihydrogène en dégageant de la chaleur,
- un dispositif de compression à hydrures métalliques configuré pour être chauffé par lors de phases de chauffage et de désorption et
- un réseau d'acheminement du dihydrogène au dispositif de compression configuré pour délivrer du dihydrogène au dispositif de compression lors d'une phase d'absorption,
- caractérisé en ce qu'il comporte un réseau caloriporteur dans lequel circule un fluide caloporteur, ledit réseau mettant en connexion fluidique un évaporateur, un compresseur, un condenseur et un détendeur et étant adapté pour que la chaleur dégagée par l'électrolyseur soit transmise au fluide caloporteur au niveau de l'évaporateur et qu'une partie de la chaleur lors des phases de chauffage et de désorption du dihydrogène soit cédée par le fluide caloporteur au niveau du condenseur.

**FIG. 2**

EP 4 202 081 A2

## Description

## DOMAINE TECHNIQUE

Le domaine de l'invention est celui des systèmes de production-compression du dihydrogène.

## ETAT DE LA TECHNIQUE

Le dihydrogène ($H_2$) représente une alternative aux énergies fossiles, notamment dans le domaine des transports. Il peut par exemple servir de comburant dans une pile à combustible alimentant un moteur électrique. En outre, le dihydrogène trouve de nombreuses applications dans le domaine industriel, par exemple pour la production d'ammoniac.

Dans des conditions normales de pression et de température, le dihydrogène présente une très faible densité volumique, de l'ordre de 0,089 kg/m$^3$. Or, dans de nombreux domaines, on a besoin d'une densité en gaz beaucoup plus importante. La pression nominale d'utilisation du dihydrogène est donc souvent très élevée. Elle peut être comprise entre 200 et 900 bars.

Le dihydrogène est majoritairement produit par reformage du méthane ($CH_4$). Dans ce cas, il est ensuite transporté chez les clients, sur les sites industriels ou les stations-service.

Une alternative consiste à produire le dihydrogène directement sur les sites industriels ou les stations-service, par exemple par électrolyse. La méthode de l'électrolyse consiste à imposer la circulation d'un courant électrique à travers un électrolyseur, l'énergie électrique cédée à l'électrolyseur permettant à l'électrolyseur de transformer l'eau en dioxygène et en dihydrogène. On estime qu'il faut environ 55 kWh d'énergie électrique pour produire 1 kg de dihydrogène par électrolyse. Cette estimation prend en compte l'énergie nécessaire à la mise en oeuvre de la réaction d'électrolyse, mais également la consommation des auxiliaires tels que la pompe et les ventilateurs du système de refroidissement.

La production de dihydrogène par électrolyse présente plusieurs inconvénients. Le rendement d'un électrolyseur, constitué par le rapport de l'énergie ayant servie à la transformation chimique sur l'énergie électrique fournie à l'électrolyseur, est de l'ordre de 80 % au début de la vie d'un électrolyseur et diminue en moyenne de 1,7 % chaque année pour atteindre environ 67 % en fin de vie de l'électrolyseur. Le reste de l'énergie électrique, de l'ordre de 10 kWh par kilogramme de dihydrogène produit, est converti en chaleur et la quantité de chaleur augmente avec le temps. Les électrolyseurs devant opérer entre 60 °C et 80 °C selon la technologie utilisée, la chaleur produite en excès doit être évacuée. L'évacuation de la chaleur nécessite souvent l'ajout d'un équipement supplémentaire, par exemple un refroidisseur sec ou à air. Le fonctionnement de l'équipement supplémentaire peut lui-même nécessiter un apport d'énergie électrique diminuant ainsi le rendement global de l'électrolyseur. La consommation électrique dudit équipement est typiquement de l'ordre de 0,9 kWh par kilogramme de dihydrogène produit.

En outre, un électrolyseur ne permet pas de produire du dihydrogène à des pressions élevées. La pression du dihydrogène produit par un électrolyseur est généralement comprise entre 1 bar et 30 bars. Utilisé seul, un électrolyseur nécessite donc d'énormes volumes de stockage pour stocker le dihydrogène issu de l'électrolyseur car ledit dihydrogène présente une très faible densité.

Une solution largement utilisée consiste à combiner l'électrolyseur à un système de compression mécanique. Les compresseurs à pistons, à diaphragme, les compresseurs hydrauliques, pneumatiques ou ioniques sont des exemples de compresseurs disponibles sur le marché. Néanmoins, ces technologies présentent plusieurs inconvénients qui découlent de la nature mécanique de la compression. Elles sont souvent bruyantes et fragiles, le remplacement de pièces représentant un coût significatif.

En outre, toutes ces technologies ont besoin d'un apport d'énergie électrique pour comprimer le gaz et le refroidir. Elles nécessitent également un système de refroidissement qui peut lui-même avoir besoin d'une alimentation électrique. On estime que la compression d'un kilogramme de dihydrogène de 30 bars à 450 bars de pression consomme 3,3 kWh d'énergie électrique, ce qui diminue encore le rendement global du système combinant la production de dihydrogène par électrolyse et la compression du dihydrogène produit.

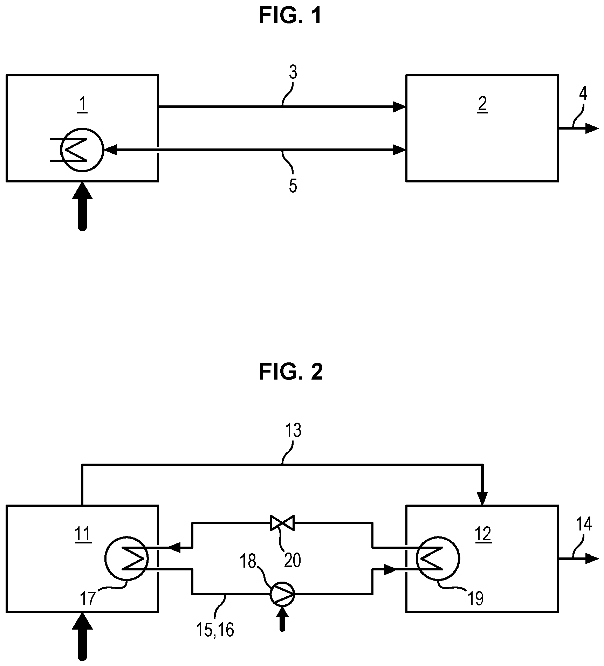

En référence à la Figure 1, une solution alternative consiste à comprimer le dihydrogène produit par un électrolyseur 1 à l'aide d'un dispositif de compression à hydrures métalliques 2, le dihydrogène basse pression étant acheminé de l'électrolyseur 1 jusqu'au dispositif de compression à hydrures métalliques 2 par un réseau d'acheminement basse pression 3. Le dispositif de compression à hydrures métalliques 2 comporte au moins un alliage métallique capable d'absorber du dihydrogène à basse pression et à basse température, puis de relâcher le dihydrogène à plus haute pression dans un réseau haute pression 4 lorsque ledit alliage est porté à une plus haute température. Puisque la pression du dihydrogène désorbé à la sortie du dispositif de compression est supérieure à la pression du dihydrogène à l'entrée du dispositif de compression, le dihydrogène a globalement été comprimé et le taux de compression, correspondant au rapport de la pression de dihydrogène en sortie sur la pression de dihydrogène en entrée, est supérieur à 1.

La technologie des compresseurs à hydrures métalliques présente plusieurs avantages. La compression est passive puisqu'elle n'implique pas de mouvements de pièces mécaniques. En conséquence, un dispositif de compression à hydrures métalliques est plus silencieux qu'un compresseur mécanique et il est moins coûteux à l'entretien.

En outre, cette technologie fonctionne uniquement avec un apport d'énergie thermique. L'énergie thermique permet d'augmenter la température de l'alliage métallique et de désorber le dihydrogène. L'excédent de chaleur généré par l'électrolyseur 1 peut avantageusement être redistribué au dispositif de compression à hydrures métalliques 2 pour son fonctionnement, le transfert de chaleur étant assuré par un réseau caloriporteur 5. Une telle optimisation permet d'améliorer le rendement du système global qui combine la production de dihydrogène par électrolyse et la compression dudit dihydrogène. En effet, non seulement cette configuration ne nécessite pas qu'on fournisse d'énergie électrique à un dispositif additionnel de chauffage du dispositif de compression 2 pour la compression du dihydrogène, par exemple une résistance électrique ou une chaudière à combustible, mais elle ne nécessite pas non plus de munir l'électrolyseur d'un dispositif de refroidissement et donc de fournir de l'énergie électrique pour le fonctionnement dudit dispositif. Dans cette configuration, la consommation d'énergie électrique du dispositif de compression 2 est réduite uniquement à l'actionnement de pompes et de dispositifs de contrôle et à l'alimentation d'un dispositif de refroidissement. La consommation du dispositif de compression à hydrures métalliques 2 est inférieure à 0,5 kWh par kilogramme de dihydrogène.

Toutefois, la combinaison de l'électrolyseur 1 et du dispositif de compression à hydrures métalliques 2 ne permet pas d'obtenir un taux de compression du dihydrogène très important. En effet, le taux de compression du dispositif de compression à hydrures métalliques 2 dépend de la différence entre la température de désorption du dihydrogène et la température d'absorption dudit dihydrogène. Dans la combinaison décrite ci-dessus entre l'électrolyseur 1 et le dispositif de compression à hydrures métalliques 2, la température d'absorption est égale ou légèrement supérieure à la température ambiante. Elle est donc comprise entre 0°C et 45°C. La température de désorption est la température de l'électrolyseur 1. Elle est donc comprise entre 60 et 80°C. Une différence de température comprise entre 20 et 80°C permet d'obtenir des taux de compression de l'ordre de 2. La pression maximale en dihydrogène à la sortie de l'électrolyseur 1 étant de l'ordre de 30 bars, on obtient une pression maximale en dihydrogène à la sortie du dispositif de compression 2 dans le réseau haute pression 4 de l'ordre de 60 bars. Cette pression est encore insuffisante pour la plupart des applications.

La solution consistant à utiliser un dispositif de compression à hydrures métalliques comportant au moins deux unités de compression connectées en série, chaque unité de compression permettant de multiplier la pression par 2 entre l'entrée et la sortie de l'unité, n'est pas envisageable dans le cas d'une combinaison avec l'électrolyseur telle qu'envisagée sur la Figure 1, car on est limité par l'énergie thermique que peut fournir l'électrolyseur 1, soit 10 kWh par kilogramme de dihydrogène produit si le rendement de l'électrolyseur 1 est de l'ordre de 80 %. Cette quantité d'énergie et le niveau de température sont trop faibles pour alimenter plusieurs unités de compression, chaque unité de compression consommant environ 6 kWh par kilogramme de dihydrogène à une température de 120°C.

## BREVE DESCRIPTION DE L'INVENTION

Un but de l'invention est de fournir du dihydrogène produit par électrolyse à haute pression en limitant les nuisances sonores et les coûts de maintenance de l'installation de production.

Un autre but de l'invention est de produire du dihydrogène électrolytique à haute pression en limitant la consommation électrique de l'installation de production-compression du dihydrogène.

A cet effet, l'invention propose un système combiné de production et de compression de dihydrogène comprenant :

- un électrolyseur configuré pour produire du dihydrogène en dégageant de la chaleur,
- un dispositif de compression à hydrures métalliques configuré pour être chauffé par apport de chaleur lors de phases de chauffage et de désorption du dihydrogène, et
- un réseau d'acheminement du dihydrogène depuis l'électrolyseur jusqu'au dispositif de compression à hydrures métalliques configuré pour délivrer du dihydrogène au dispositif de compression à hydrures métalliques lors d'une phase d'absorption de dihydrogène, caractérisé en ce qu'il comporte en outre un réseau caloriporteur dans lequel circule un fluide caloporteur,
- un réseau caloriporteur dans lequel circule un fluide caloporteur, , ledit réseau mettant en connexion fluidique successivement un évaporateur, un compresseur, un condenseur et un détendeur et étant adapté pour qu'au moins une partie de la chaleur dégagée par l'électrolyseur soit transmise au fluide caloporteur au niveau de l'évaporateur et qu'au moins une partie de l'apport de chaleur au dispositif de compression à hydrures métalliques lors des phases de chauffage et de désorption du dihydrogène soit cédée par le fluide caloporteur au niveau du condenseur.

Le dispositif de compression à hydrures métalliques est moins bruyant et moins fragile qu'un compresseur mécanique.

La combinaison dudit dispositif de compression avec une pompe à chaleur permet d'augmenter la température à la désorption du dihydrogène et donc le taux de compression dudit dihydrogène II est ainsi possible d'atteindre des taux de compression de 4.

La chaleur générée en excès par la réaction d'électrolyse est transmise au fluide caloporteur donc le circuit interne de refroidissement de l'électrolyseur ne nécessite pas de dispositif de refroidissement électrique.

Une telle optimisation permet de réduire d'environ 1,6 % la consommation du système d'électrolyse.

Le dispositif de compression à hydrures métalliques ne nécessite pas d'énergie électrique et l'énergie thermique qui est fournie audit dispositif de compression par l'intermédiaire du fluide caloporteur provient de l'électrolyseur et du compresseur de la pompe à chaleur. Ledit compresseur nécessite une alimentation électrique de l'ordre de 3 kWh par kilogramme de dihydrogène produit et porté à une pression de 450 bars. L'étape de préchauffage du dispositif de compression à hydrures métalliques réduit la consommation électrique moyenne de la compression, sur un cycle complet de compression, à 2,5 kWh par kilogramme de dihydrogène produit, soit une économie de 24 % par rapport à un compresseur de dihydrogène mécanique.

Avantageusement, mais facultativement, le système selon l'invention peut comprendre l'une au moins parmi les caractéristiques suivantes, prises seules ou combinées lorsque cela est techniquement possible :

- l'évaporateur est intégré à l'électrolyseur et relie un circuit interne de refroidissement de l'électrolyseur au réseau caloriporteur, de sorte que le transfert de la au moins une partie de chaleur dégagée par l'électrolyseur se fasse directement du circuit interne de refroidissement de l'électrolyseur vers le fluide caloporteur ;
- le système comprend en outre un premier réseau de liaison dans lequel circule un premier fluide de liaison, le premier réseau de liaison raccordant un circuit interne de refroidissement de l'électrolyseur et l'évaporateur, la au moins une partie de la chaleur dégagée par l'électrolyseur transmise au fluide caloporteur au niveau de l'évaporateur étant transmise par l'intermédiaire du premier fluide de liaison circulant dans le premier réseau de liaison ;
- le condenseur est intégré au dispositif de compression à hydrures métalliques et relie le réseau caloriporteur à un circuit interne de chauffage du dispositif de compression à hydrures métalliques, de sorte que le transfert de la au moins une partie de l'apport de chaleur au dispositif de compression à hydrures métalliques se fasse directement du fluide caloporteur vers le circuit interne de chauffage du dispositif de compression à hydrures métalliques ;
- le système comprend en outre un deuxième réseau de liaison dans lequel circule un deuxième fluide de liaison, le deuxième réseau de liaison raccordant le condenseur et un circuit interne de chauffage du dispositif de compression à hydrures métalliques, la au moins une partie de l'apport de chaleur au dispositif de compression à hydrures métalliques étant cédée par l'intermédiaire du deuxième fluide de liaison circulant dans le deuxième réseau de liaison.
- la chaleur dégagée par l'électrolyseur est intégralement transmise au fluide caloporteur ;
- l'apport de chaleur au dispositif de compression à hydrures métalliques est intégralement transmis par le fluide caloporteur ;
- le réseau caloriporteur du système comporte en outre une première conduite de dérivation en parallèle du compresseur et une deuxième conduite de dérivation en parallèle du détendeur et une pompe de circulation branchée sur la première conduite de dérivation ou sur la deuxième conduite de dérivation, le système comportant une unité de contrôle configurée pour contrôler la dérivation du fluide caloporteur de sorte que, durant des phases de chauffage et de désorption du dihydrogène dans le dispositif de compression à hydrures métalliques :
- si une température du dispositif de compression à hydrures métalliques est inférieure à une température seuil $T_S$, le fluide caloporteur circule dans la première conduite de dérivation (29) et dans la deuxième conduite de dérivation,
- si la température du dispositif de compression à hydrures métalliques est supérieure à la température seuil $T_S$, le fluide caloporteur circule à travers le compresseur et à travers le détendeur,
- la température seuil $T_S$ est préférentiellement comprise entre 50°C et 100°C ;
- l'au moins une partie de l'apport de chaleur au dispositif de compression à hydrures métalliques amène le dispositif de compression à hydrures métalliques à une température comprise entre 100°C et 150 °C ;
- le dispositif de compression à hydrures métalliques comprend au moins une paire de réservoirs, les phases de chauffage et de désorption du dihydrogène d'un premier réservoir d'une paire de réservoirs correspondant aux phases de refroidissement et d'absorption de dihydrogène du deuxième réservoir de la paire de réservoirs.

Dans un mode de réalisation avantageux de l'invention, le dispositif de compression à hydrures métalliques comprend deux unités de compression connectées en série et le condenseur comprend deux unités de condensation montées en parallèle, au moins une partie d'un apport de chaleur à chacune des unités de compression étant cédée par le fluide caloporteur au niveau de chacune des unités de condensation.

La somme des énergies fournies par le compresseur de la pompe à chaleur et par l'électrolyseur est suffisante pour alimenter deux étages de compresseurs. Chacun des deux étages de compression ayant un taux de compression de 4, le taux de compression global est de 16. Si la pression de dihydrogène à l'entrée du système est de 30 bars, la pression de sortie est de 450 bars. L'invention permet donc d'atteindre des pressions suffisantes pour de nombreuses applications.

Selon d'autres caractéristiques avantageuses de l'invention, le dispositif de compression à hydrures métalliques peut comprendre au moins une paire de réservoirs, les phases de chauffage et de désorption du dihydrogène d'un premier réservoir d'une paire de réservoirs correspondant aux phases de refroidissement et d'absorption de dihydrogène du deuxième réservoir de la paire de réservoirs.

L'invention propose également un procédé de contrôle comprenant une étape de dérivation du fluide caloporteur de sorte que, durant des phases de chauffage et de désorption du dihydrogène dans le dispositif de compression à hydrures métalliques :

- si une température du dispositif de compression à hydrures métalliques est inférieure à une température seuil $T_S$, le fluide caloporteur circule dans les conduites de dérivation,
- si la température du dispositif de compression à hydrures métalliques est supérieure à la température seuil $T_S$, le fluide caloporteur circule à travers le compresseur et le détendeur.

En outre, l'invention concerne une unité de contrôle d'un système combiné de production et de compression de dihydrogène, comprenant un processeur configuré pour mettre en oeuvre l'étape de dérivation du procédé selon l'invention.

L'invention concerne enfin un produit programme d'ordinateur comprenant des instructions qui, lorsque le programme est exécuté par un ordinateur, conduisent celui-ci à mettre en oeuvre l'étape de dérivation du procédé selon l'invention.

**BREVE DESCRIPTION DES FIGURES**

D'autres caractéristiques et avantages de l'invention ressortiront de la description détaillée qui va suivre, en référence aux dessins annexés, sur lesquels :

- La figure 1 représente un système conforme à l'état de la technique qui combine la production de dihydrogène par électrolyse et la compression du dihydrogène produit à l'aide d'un dispositif de compression à hydrures métalliques ;
- La figure 2 représente un mode de réalisation du système combiné de production et compression de dihydrogène conforme à l'invention qui comporte un électrolyseur, une pompe à chaleur haute température et un dispositif de compression à hydrures métalliques, l'évaporateur et le condenseur de la pompe à chaleur étant incorporés respectivement à l'électrolyseur et au dispositif de compression à hydrures métalliques ;

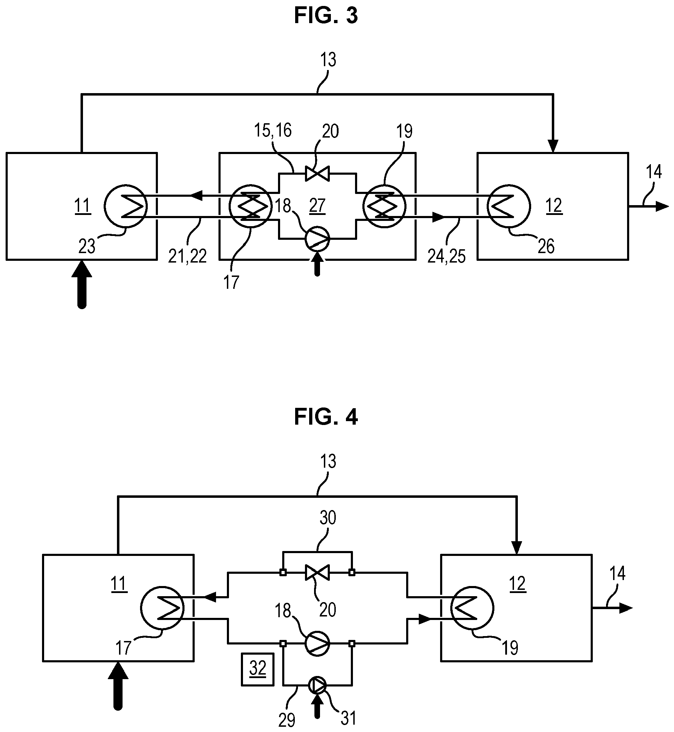

- La figure 3 représente un autre mode de réalisation du système combiné de production et compression de dihydrogène conforme à l'invention dans lequel l'évaporateur et le condenseur sont reliés respectivement à l'électrolyseur et au dispositif de compression à hydrures métalliques par des réseaux caloriporteurs de liaison ;
- La figure 4 représente un mode de réalisation alternatif du système objet de l'invention dans lequel ledit système comporte en outre des conduites de dérivation permettant la mise en oeuvre de périodes de préchauffage du dispositif de compression à hydrures métalliques au cours desquelles la pompe à chaleur du système est à l'arrêt.

Pour des raisons de lisibilité, les dessins ne sont pas nécessairement réalisés à l'échelle.

**DESCRIPTION DETAILLEE DE MODES DE REALISATION**

L'invention concerne un système permettant de produire du dihydrogène par électrolyse puis de compresser le dihydrogène produit.

En référence à la Figure 2, ce système comprend un électrolyseur 11 qui produit du dihydrogène et un dispositif de compression à hydrures métalliques 12 qui comprime le dihydrogène produit par électrolyse. Le système comprend en outre un réseau d'acheminement 13 du dihydrogène basse pression depuis l'électrolyseur 11 vers le dispositif de compression à hydrures métalliques 12 de sorte que le dihydrogène électrolytique puisse être comprimé par le dispositif de compression 12, et un réseau de dihydrogène haute pression 14 à la sortie du dispositif de compression à hydrures métalliques 12.

Le système conforme à l'invention comporte également un réseau caloriporteur 15, dans lequel circule un fluide caloporteur 16. Ce réseau caloriporteur 15 met en connexion fluidique les éléments classiques d'une pompe à chaleur, à savoir un évaporateur 17, un compresseur 18, un condenseur 19 et un détendeur 20. Les caractéristiques du réseau caloriporteur 15 seront décrites plus en détails par la suite.

L'électrolyseur 11

L'électrolyseur 11 produit du dihydrogène par électrolyse de l'eau selon une technologie choisie parmi les technologies connues de l'homme du métier, par exemple l'électrolyse alcaline ou l'électrolyse par membrane échangeuse de protons. L'électrolyse de l'eau consiste classiquement à réduire l'eau en dihydrogène au niveau d'une première électrode et à oxyder l'eau en dioxygène ($O_2$) au niveau d'une deuxième électrode. La mise en oeuvre des réactions à chacune des électrodes nécessite d'imposer un courant électrique à travers l'électrolyseur à l'aide d'un dispositif d'alimentation électrique extérieur, par exemple le réseau électrique national, un micro-réseau, une source d'énergie locale de nature solaire, éolienne ou encore hydraulique.

Selon la technologie d'électrolyse choisie, le dihydrogène est produit par l'électrolyseur 11 à une pression comprise entre 1 bar et 30 bars. Selon le système conforme à l'invention, le dihydrogène produit dans l'électrolyseur 11 est acheminé jusqu'au dispositif de compression à hydrures métalliques 12 par l'intermédiaire du réseau d'acheminement du dihydrogène 13.

L'électrolyseur 11 utilise l'énergie électrique fournie par le dispositif d'alimentation électrique pour effectuer la transformation de l'eau en dihydrogène et en dioxygène. L'électrolyseur 11 et les auxiliaires consomment de l'ordre de 55 kWh d'énergie électrique pour produire un kilogramme de dihydrogène. Le rendement de l'électrolyseur est défini comme le rapport entre le pouvoir calorifique inférieur du dihydrogène et la quantité d'énergie électrique totale fournie à l'électrolyseur 11 par le dispositif d'alimentation électrique. Le reste de l'énergie électrique reçue est perdu sous la forme d'un dégagement de chaleur.

Actuellement, le rendement des meilleurs électrolyseurs est de l'ordre de 80 % en début de vie qui dégagent donc environ 10 kWh de chaleur par kilogramme de dihydrogène produit. En outre, du fait des phénomènes de dégradation, le rendement diminue d'environ 1,7 % par an jusqu'à atteindre 67 % en fin de vie de l'électrolyseur. La quantité de chaleur dégagée par l'électrolyseur en fonctionnement augmente donc au cours du temps, pouvant atteindre 19 kWh par kilogramme de dihydrogène produit.

L'électrolyseur 11 opère à une température pouvant être comprise entre 60 °C et 80 °C selon la technologie employée. A titre d'exemples, ladite température est proche de 60 °C pour une électrolyse alcaline et elle est proche de 80 °C pour une électrolyse par membrane échangeuse de protons. La chaleur produite en excès est évacuée comme expliqué ci-dessous.

Dans le dispositif conforme à l'invention, au moins une partie de la chaleur dégagée par l'électrolyseur 11 $Q_F$ est cédée au fluide caloporteur 16 qui circule dans le réseau caloriporteur 15 au niveau de l'évaporateur 17, de sorte à diminuer la consommation électrique d'un dispositif additionnel de refroidissement de l'électrolyseur 11 dont la consommation électrique s'ajoute à la consommation propre de l'électrolyseur 11 nécessaire à la mise en oeuvre de la réaction d'électrolyse. Dans un mode particulier de réalisation de l'invention, l'évacuation de la chaleur dégagée par l'électrolyseur 11 est gérée de sorte que l'électrolyseur 11 ne comporte pas de dispositif additionnel de refroidissement.

Le dispositif additionnel de refroidissement consommant jusqu'à 0,9 kWh par kilogramme de dihydrogène produit, l'optimisation selon l'invention permet de réduire jusqu'à environ 1,6 % la consommation de la partie production du système combiné de production-compression de dihydrogène conforme à l'invention.

Selon un mode de réalisation particulier de l'invention, la chaleur dégagée par l'électrolyseur 11 est intégralement cédée au fluide caloporteur 16 à l'exception des pertes inévitables, par exemple les pertes vers l'atmosphère. L'électrolyseur 11 peut donc céder, en début de vie, 10 kWh de chaleur par kilogramme de dihydrogène produit au fluide caloporteur 16.

Le dispositif de compression à hydrures métalliques 2

Le système conforme à l'invention comprend un dispositif de compression à hydrures métalliques 12 qui utilise la propriété de certains alliages métalliques à absorber réversiblement du dihydrogène pour former des hydrures métalliques selon l'équilibre chimique suivant :

$$M_{(s)} + \frac{x}{2} H_{2(g)} \leftrightarrows MH_{x(s)} + \text{chaleur} \quad (1)$$

Où M est un alliage métallique et $MH_x$ est l'hydrure métallique correspondant.

La réaction dans le sens de la précipitation de l'hydrure métallique est exothermique, tandis que la réaction dans le sens de la désorption du dihydrogène nécessite un apport d'énergie thermique extérieur (endothermique).

Ce système est monovariant. A une température donnée dite température d'équilibre $T^{eq}$, la pression d'équilibre en dihydrogène $P_{H2}^{eq}$ dépend très peu de la concentration en hydrogène dans le solide. En outre, la valeur de la pression $P_{H2}^{eq}$ est directement liée à celle de la température $T^{eq}$ par la loi de Van't Hoff :

$$\ln\left(\frac{P_{H2}^{eq}}{P°}\right) = \frac{\Delta_f H}{R T^{eq}} - \frac{\Delta_f S}{R}$$

Où $\Delta_f H$ et $\Delta_f S$ sont respectivement l'enthalpie et l'entropie de formation de l'hydrure métallique, R la constante des gaz parfaits et P° la pression standard.

Ainsi, la valeur de la pression d'équilibre en dihydrogène $P_{H2}^{eq}$ augmente avec la température $T^{eq}$. L'alliage métallique M peut donc se charger en dihydrogène à basse température et à basse pression puis, si on augmente sa température et si on lui fournit l'énergie nécessaire à la désorption du dihydrogène, ledit alliage M peut relâcher le dihydrogène à une pression plus importante, créant ainsi un effet de compression.

En outre, la compression du dihydrogène est qualifiée de passive car elle ne nécessite pas de mouvement mécanique de pièces. En conséquence, le dispositif de compression à hydrures métalliques 12 est moins bruyant, moins fragile et moins coûteux à l'entretien qu'un dispositif de compression mécanique classique tel que, par exemple, un compresseur à pistons, à diaphragme, un compresseur hydraulique, pneumatique ou ionique.

Selon un mode de réalisation, le dispositif de compression à hydrures métalliques 12 comprend au moins un réservoir comportant au moins un alliage métallique capable d'absorber du dihydrogène en formant l'hydrure métallique correspondant. Une valve d'entrée permet de contrôler le flux de dihydrogène acheminé depuis l'électrolyseur 11 par le réseau d'acheminement 13 qui entre dans le réservoir - dit flux de dihydrogène en entrée - et une valve de sortie permet de contrôler le flux de dihydrogène qui sort du réservoir - dit flux de dihydrogène en sortie. Le cycle de compression se déroule en quatre phases successives.

Durant une phase E1 d'absorption, la valve de sortie est fermée et la valve d'entrée est ouverte : le flux de dihydrogène en entrée pénètre dans le réservoir de telle sorte que l'alliage métallique se charge en dihydrogène. L'équilibre de la réaction chimique (1) est déplacé dans le sens de la formation de l'hydrure métallique et le dispositif de compression à hydrures métalliques génère donc de la chaleur qui est évacuée, par exemple avec un refroidisseur à sec. Durant la phase E1 d'adsorption, la pression en dihydrogène varie peu et le dispositif de compression à hydrures métalliques 12 est maintenu à une température $T_0$, dite température d'adsorption. La température d'absorption $T_0$ est par exemple égale ou légèrement supérieure à la température ambiante. Elle est comprise par exemple entre 0 °C et 45 °C.

Durant une phase E2 de chauffage qui suit la phase E1 d'adsorption, la valve d'entrée et la valve de sortie sont fermées. Le dispositif de compression à hydrures métalliques 12 est chauffé grâce à un apport de chaleur extérieur, jusqu'à atteindre une température $T_1$ dite température de désorption. La température de désorption $T_1$ est supérieure à la température $T_0$ d'adsorption. L'augmentation de la température du réservoir s'accompagne d'une forte augmentation de la pression en dihydrogène.

Durant une phase de désorption E3 qui suit la phase E2 de chauffage, le dispositif de compression à hydrures métalliques 12 reçoit toujours de la chaleur grâce à un apport de chaleur extérieur. La valve d'entrée est fermée et la valve de sortie est ouverte de sorte que la pression en dihydrogène dans le réservoir varie peu durant la phase E3 et la température dudit dispositif est maintenue à la température de désorption $T_1$. L'apport de chaleur extérieur fournie l'énergie nécessaire au déplacement de l'équilibre chimique (1) dans le sens de la régénération de l'alliage métallique et de la désorption du dihydrogène. L'alliage métallique se décharge en dihydrogène et le flux de dihydrogène en sortie sort du réservoir par la valve de sortie dans le réseau de dihydrogène haute pression 14.

Dans une dernière phase de refroidissement E4, la valve d'entrée et la valve de sortie sont fermées. La température du dispositif de compression à hydrures métalliques est ramenée à la température d'adsorption $T_0$. La pression en dihydrogène dans le réservoir chute pour atteindre la valeur de la pression du dihydrogène à l'entrée du dispositif de compression à hydrures métalliques 2 dans le réseau d'acheminement 3 du dihydrogène basse pression.

Le taux de compression du dispositif de compression à hydrures métalliques 12, qui correspond au rapport de la pression du dihydrogène en sortie du dispositif de compression à hydrures métalliques 12 sur la pression du dihydrogène en entrée, est supérieur à 1. Ledit taux de compression dépend de la différence entre la température de désorption $T_1$ et la température d'adsorption $T_0$. Plus la différence entre les températures $T_1$ et $T_0$ est importante, plus le taux de compression est grand.

Dans le système conforme à l'invention, au moins une partie de l'apport de chaleur extérieur au cours des phases de chauffage E2 et de désorption E3 du réservoir du dispositif de compression à hydrures métalliques 12 Qc est cédée par le fluide caloporteur 16 qui circule dans le réseau caloriporteur 15 au niveau du condenseur 19, de sorte à diminuer la consommation électrique d'un dispositif additionnel de chauffage du dispositif de compression 12. Selon un mode de réalisation particulier de l'invention, l'apport de chaleur au dispositif de compression à hydrures métalliques 12 est géré de telle sorte que le dispositif de compression à hydrures métalliques 12 ne comporte pas de dispositif additionnel de chauffage dont le fonctionnement nécessite une alimentation électrique.

Selon un mode de réalisation particulier, l'apport de chaleur nécessaire au fonctionnement au dispositif de compression à hydrures métalliques 12 est entièrement fourni par le fluide caloporteur 16, de sorte que le dispositif de compression à hydrures métalliques 12 ne dispose pas d'autre source d'apport de chaleur.

Dans le système conforme à l'invention, le fluide caloporteur 16 est un fluide qualifié de « fluide haute température » bien connu de l'homme du métier et le fonctionnement du réseau caloriporteur 15 est celui d'une pompe à chaleur haute température. Le fluide caloporteur 16 du système conforme à l'invention permet de chauffer le dispositif de compression à hydrures métalliques 12 de sorte à atteindre une température de désorption $T_1$ supérieure à celle de l'électrolyseur 11 en fonctionnement. La température de désorption $T_1$ du système conforme à l'invention est supérieure à 60 ou 80 °C. La température de désorption $T_1$ du système conforme à l'invention est préférentiellement comprise entre 100 et 150 °C afin d'obtenir des taux de compression de l'ordre de quatre. A titre d'exemple, si la pression du dihydrogène produit dans l'électrolyseur 11 et acheminé à l'entrée du dispositif de compression à hydrures métalliques 12 par le réseau d'acheminement 13 est de 30 bars, la pression du dihydrogène à la sortie dudit dispositif de compression 12 dans le réseau de dihydrogène haute pression 14 est alors de l'ordre de 120 bars. A titre de comparaison, la simple combinaison du réseau de refroidissement d'un électrolyseur 1 et du réseau de chauffage d'un dispositif de compression à hydrures métalliques 2 sans pompe à chaleur intermédiaire telle que représentée sur la Figure 1 ne permet pas d'obtenir un taux de compression du dihydrogène supérieur à deux et des pressions de dihydrogène supérieures à 60 bars.

L'invention permet donc de comprimer du dihydrogène électrolytique à haute pression tout en bénéficiant des avantages apportés par la technologie des hydrures métalliques par rapport aux dispositifs de compression mécaniques, notamment en matière de nuisance sonore et d'entretien.

Selon un mode de réalisation, le système comprend un dispositif de stockage supplémentaire, dit stockage tampon. Le dispositif de stockage tampon est propre à stocker l'hydrogène au cours des phases de chauffage E2, de désorption E3 et de refroidissement E4, au cours desquelles la valve d'entrée est fermée et le flux d'hydrogène ne pénètre pas dans le réservoir. En outre, le système peut comprendre un système de refroidissement usuel, comme par exemple un aéroréfrigérant, permettant d'évacuer momentanément vers l'extérieur, la chaleur du fluide caloporteur, au cours des étapes de d'absorption du dihydrogène E1 et de refroidissement E4.

Selon un mode de réalisation alternatif, le dispositif de compression à hydrures métalliques 12 comporte une paire de réservoirs, chaque cuve contenant au moins un alliage métallique capable de fixer du dihydrogène et réalisant des cycles de compression tels que décrits ci-dessus. Dans ce mode de réalisation, les phases de chauffage E2 et de désorption du dihydrogène E3 d'un premier réservoir de la paire de réservoirs peuvent avantageusement se dérouler en même temps que les phases de refroidissement E4 et d'absorption de dihydrogène E1 du deuxième réservoir de la paire de réservoirs, les phases E4 et E1 du premier réservoir de la paire de réservoirs se déroulant alors en même temps que les phases E2 et E3 du deuxième réservoir de la paire de réservoirs. Ainsi, la chaleur extérieure et le flux de dihydrogène sont successivement fournis à chacun des deux réservoirs et de manière alternée. En d'autres termes, quand un des deux réservoirs reçoit de la chaleur extérieure l'autre des deux réservoirs reçoit un flux de dihydrogène.

L'alternance temporelle des phases de chauffage et de désorption de dihydrogène, respectivement E2 et E3, des deux réservoirs de la paire de réservoirs vient avec l'avantage de pouvoir fournir un apport de chaleur extérieur continu au dispositif de compression à hydrures métalliques 12 et donc fournir un débit continu de dihydrogène à la sortie du dudit dispositif de compression 12 dans le réseau de dihydrogène haute pression 14.

Selon encore un mode de réalisation alternatif, le dispositif de compression à hydrures métalliques 12 comprend plus de deux réservoirs. Dans ce mode de réalisation, on peut avantageusement alterner les phases E2 et E3 des différents réservoirs. Par exemple, pendant que l'un des réservoirs reçoit un flux de dihydrogène, un autre des réservoirs reçoit de la chaleur extérieure et un dernier des réservoirs ne reçoit ni hydrogène ni chaleur et est dans la phase de refroidissement E4.

Enfin, de manière avantageuse, le dispositif de compression à hydrures métalliques 12 est constitué de deux unités de compression connectées en série, chaque unité de compression pouvant être constituée d'un ou plusieurs réservoirs qui fonctionnent selon le cycle de compression décrit ci-dessus.

Selon ce mode de réalisation, au moins une partie de l'apport de chaleur extérieur apporté à chacune des unités de compression est cédée par le fluide caloporteur 16 de sorte que la température de désorption $T_1a$ de la première unité de compression et la température de désorption $T_2b$ de la deuxième unité de compression sont toutes les deux supérieures à 60 ou 80 °C. La température de désorption $T_1a$ de la première unité de compression est par exemple égale à la température de désorption $T_1b$ de la deuxième unité de compression. Dans ce cas, le taux de compression de la première unité de compression est égal au taux de compression de la deuxième unité de compression.

A titre d'exemple, si le taux de compression de chacune des unités de compression est de quatre, le taux de compression du dispositif de compression à hydrures métalliques 12 global est de 16. Ainsi, si la pression du dihydrogène est de l'ordre de 30 bars en sortie de l'électrolyseur 11, elle est de 120 bars à la sortie de la première unité de compression et elle est de 480 bars à la sortie de la deuxième unité de compression. L'invention permet donc d'obtenir des pressions de dihydrogène intéressantes pour la plupart des applications.

La mise en série de deux unités de compression du dispositif de compression à hydrures métalliques 12 dans le cadre d'une combinaison avec l'électrolyseur 11, chaque unité de compression consommant de l'ordre de 6 kWh par kilogramme de dihydrogène, est rendue possible par l'utilisation de la pompe à chaleur décrite par la suite.

La pompe à chaleur à haute température

Le réseau caloriporteur 15 conforme à l'invention met en connexion fluidique, dans une boucle fermée, les éléments classiques d'une pompe à chaleur, c'est-à-dire un évaporateur 17, un compresseur 18, un condenseur 19 et un détendeur 20. Un fluide caloporteur 16 circule au sein dudit réseau caloriporteur 15. Le fluide caloporteur 16 est préférentiellement un fluide « haute température » bien connu de l'homme du métier, qui fonctionne à une température comprise entre 50 et 160 °C.

Le fluide caloporteur 16 est par exemple un fluide parmi les fluides HydroFluoro-Oléfines (connu sous l'acronyme HFO), ou un fluide parmi les fluides Fluoro-Chloro-Oléfines partiellement hydrogénés (connu sous l'acronyme HCFO). Le fluide caloporteur 16 peut aussi être un fluide naturel, par exemple du dioxyde de carbone, de l'ammoniac, du butane, du pentane. Le fluide caloporteur 16 est un fluide dont le potentiel de réchauffement global, souvent désigné par l'acronyme GWP qui découle de l'appellation anglo-saxone « Global Warming Potential », a une valeur inférieure 20, préférentiellement inférieure à 2.

Dans le système conforme à l'invention, les éléments 17, 18, 19 et 20 fonctionnent selon le fonctionnement classique d'une pompe à chaleur. Le fluide caloporteur 16, en circulant dans le réseau caloriporteur 15, extrait de l'énergie thermique $Q_F$ d'une source froide au niveau de l'évaporateur 17 en s'évaporant. Puis, le fluide caloporteur 16 gazeux reçoit un travail W de la part du compresseur 18 par compression dudit fluide caloporteur 16 gazeux. Le fluide caloporteur 16 gazeux qui a été comprimé fournit ensuite de l'énergie thermique Qc à une source chaude au niveau du condenseur 19 en se condensant. Finalement, le fluide caloporteur 16 liquide est détendu au niveau du détendeur 20. La transformation globale à travers les éléments 17, 18, 19 et 20 étant isenthalpique, l'énergie thermique fournie à la source chaude est égale à la somme de l'énergie extraite de la source froide $Q_F$ et du travail W fourni par le compresseur 18. L'énergie nécessaire au fonctionnement du compresseur 7 est préférentiellement fournie par un dispositif externe d'alimentation électrique. La température de la source froide $T_F$ est inférieure à la température de la source chaude $T_C$.

Selon un premier mode de réalisation représenté sur la Figure 2 à gauche, l'évaporateur 17 est intégré à l'électrolyseur 11 qui constitue la source froide de la pompe à chaleur, de sorte qu'au moins une partie de la chaleur $Q_F$ générée par l'électrolyseur 11 en fonctionnement est directement transmise au fluide caloporteur 16 pour l'évaporation dudit fluide caloporteur 16. La source froide est par exemple constituée par le circuit interne de refroidissement de l'électrolyseur 11. L'énergie thermique $Q_F$ nécessaire à l'évaporation du fluide caloporteur 16 est prélevée dans ledit circuit interne de refroidissement de l'électrolyseur 11 au niveau de l'évaporateur 17.

Selon un mode de réalisation alternatif représenté sur la Figure 3 à gauche, l'évaporateur 17 n'est pas intégré à l'électrolyseur 11 de sorte que le système qui fait l'objet de l'invention comporte en outre un premier réseau de liaison 21 dans lequel circule un premier fluide de liaison 22. Le premier fluide de liaison 22 est un fluide caloporteur dont la nature peut être différente de celle du fluide caloporteur 16. Selon ce mode de réalisation, la chaleur nécessaire à l'évaporation du fluide caloporteur 16 $Q_F$ est extrait du premier fluide de liaison 22 au niveau de l'évaporateur 17. Ladite chaleur $Q_F$ est elle-même fournie au premier fluide de liaison 22 par l'électrolyseur 11 en fonctionnement, par exemple par le circuit de refroidissement interne de l'électrolyseur 11, au niveau d'un premier échangeur de chaleur 23, de sorte qu'au moins une partie de la chaleur $Q_F$ générée par l'électrolyseur 11 est extraite par le premier fluide de liaison 22.

Selon un mode de réalisation représenté sur la Figure 2 à droite, le condenseur 19 est intégré au dispositif de compression à hydrures métalliques 12 qui constitue la source chaude de la pompe à chaleur, de sorte que la chaleur générée par la condensation du fluide caloporteur 16 au niveau du condenseur 19 est directement transmise au dispositif de compression à hydrures métalliques 12 et constitue au moins une partie de l'apport de chaleur nécessaire au fonctionnement dudit dispositif de compression 12 durant la phase E2 de chauffage et la phase E3 de désorption du dihydrogène. Plus précisément, la source chaude est par exemple constituée par le circuit interne de chauffage du dispositif de compression à hydrures métalliques 12. L'énergie thermique Qc fournit par la condensation du fluide caloporteur 16 est fournie audit circuit interne de chauffage au niveau du condenseur 19.

Selon un mode de réalisation alternatif représenté sur la Figure 3 à droite, le condenseur 19 n'est pas intégré au dispositif de compression à hydrures métalliques 12, de sorte que le système qui fait l'objet de l'invention comprend un deuxième réseau de liaison 24 dans lequel circule un deuxième fluide de liaison 25. Le deuxième fluide de liaison 25 est un fluide caloporteur dont la nature peut être différente de celle du fluide caloporteur 16 ou de celle du premier fluide de liaison 22. Dans ce mode de réalisation, la chaleur Qc générée par la condensation du fluide caloporteur 16 est transférée au deuxième fluide de liaison 25 au niveau du condenseur 19. Ladite chaleur Qc est ensuite restituée au dispositif de compression à hydrures métalliques 12, par exemple au circuit interne de chauffage dudit dispositif 12 au niveau d'un deuxième échangeur de chaleur 26 entre le deuxième fluide de liaison 25 et ledit circuit interne de chauffage.

L'un ou l'autre des modes de réalisation concernant l'agencement de l'évaporateur 17 représentés à gauche respectivement des Figures 2 et 3 peut être avantageusement combiné avec l'un ou l'autre des modes de réalisation concernant l'agencement du condenseur 19 représentés à droite respectivement des Figures 2 et 3, en fonction des objectifs de l'industriel ou de la station-service, et/ou des circonstances, par exemple si une installation de production de dihydrogène par électrolyse et/ou de compression dudit dihydrogène à l'aide d'un dispositif de compression à hydrures métalliques est déjà en place et doit simplement être adaptée.

La combinaison des modes de réalisation représentée sur la Figure 2, dans lesquels l'évaporateur 16 et le condenseur 19 sont intégrés respectivement à l'électrolyseur 11 et au dispositif de compression à hydrures métalliques 12, constitue la solution la plus avantageuse au niveau énergétique car elle limite les pertes de chaleur en limitant notamment le nombre d'échangeurs thermiques puisqu'elle s'affranchit de l'utilisation des échangeurs 23 et 26.

La combinaison des autres modes de réalisation représentée sur la Figure 3 peut permettre l'installation d'une pompe à chaleur 27 dans laquelle sont déjà intégrés le réseau caloriporteur 15, l'évaporateur 17, le compresseur 18, le condenseur 19 et le détendeur 20, et sur laquelle l'industriel raccorde simplement les réseaux de liaison 21 et 24.

La mise en place du système conforme à l'invention ne requiert pas de modification majeure du corps de l'électrolyseur 11. Seul l'évaporateur 17 ou l'échangeur de chaleur 23 doit être adapté aux spécifications du fluide caloporteur 16 ou 22.

De la même façon, la mise en place du système conforme à l'invention ne requiert pas de modification majeure du corps du dispositif de compression à hydrures métalliques 12. Seul le condenseur 19 ou l'échangeur de chaleur 26 doit être adapté aux spécifications du fluide caloporteur 16 ou 25.

En outre, l'efficacité de la pompe à chaleur conforme à l'invention peut être évaluée par la valeur de son Coefficient de Performance, défini comme le rapport de l'énergie Qc cédée au niveau du condenseur 19 sur l'énergie électrique W consommée par le compresseur 18. La valeur du COP d'une pompe à chaleur est d'autant plus élevée que la différence entre la température de la source chaude $T_C$ et la température de la source froide $T_F$ est faible. A titre d'exemple, le coefficient de performance est de l'ordre de 5 lorsque la différence entre la température de la source chaude $T_C$ et la température de la source froide $T_F$ est de l'ordre de 30 °C. Le coefficient de performance est de l'ordre de 2 lorsque la différence entre la température de la source chaude $T_C$ et la température de la source froide $T_F$ est de l'ordre de 130 °C.

Dans le système conforme à l'invention, où la source froide constituée par l'électrolyseur 11 est à une température $T_F$ de l'ordre de 60 °C ou 80 °C et la source chaude constituée par le dispositif de compression à hydrures métalliques 12 est à une température $T_C$ préférentiellement comprise entre 100 et 150 °C, le COP est de l'ordre de 4. Si on considère en outre que l'électrolyseur 11 fournit une quantité de chaleur $Q_F$ de l'ordre de 10 kWh par kilogramme de dihydrogène produit, il vient que l'apport de chaleur Qc au dispositif de compression à hydrures métalliques 12 peut atteindre 13 kWh par kilogramme de dihydrogène produit, le compresseur 18 consommant 3 kWh d'électricité par kilogramme de dihydrogène produit.

Le système conforme à l'invention permet donc d'aligner en série deux unités de compression au sein du dispositif de compression à hydrures métalliques 12, chaque unité consommant de l'ordre de 6 kWh par kilogramme de dihydrogène, sans dispositif de chauffage interne additionnel. L'alignement des deux unités de compression au sein du système conforme à l'invention permet d'obtenir du dihydrogène haute pression, à des valeurs de pression comparables à celles obtenues avec un dispositif de compression mécanique.

A titre de comparaison, le dispositif de compression à hydrures métalliques 2 représenté sur la Figure 1 ne peut extraire, dans les mêmes conditions, que 10 kWh par kilogramme de dihydrogène produit à une température maximale de 80°C, ce qui est insuffisant à la mise en place de deux unités de compression 2a et 2b en série, et donc à l'obtention de pression de dihydrogène élevées.

Dans le mode de réalisation de l'invention où le dispositif de compression à hydrures métalliques 12 comporte deux unités de compression en série, le condenseur 19 peut par exemple comprendre deux unités de condensation montées en parallèle, de sorte que au moins une partie de l'apport de chaleur à la première unité de compression, respectivement à la deuxième unité de compression, soit extraite au niveau de la première unité de condensation, respectivement au niveau de la deuxième unité de condensation. Les deux unités de condensation du condenseur 19 peuvent être soit intégrées aux unités de compression, soit reliées auxdites unités par des réseaux de liaison dans lesquels circulent des fluides de liaison.

Enfin, il est à noter que durant la période transitoire de E2 au cours de laquelle la source chaude constituée par le dispositif de compression à hydrures métalliques 12 doit chauffer de 60-80 °C jusqu'à la température de désorption $T_1$ comprise préférentiellement entre 100 °C et 150 °C, la différence de température entre la source chaude et la source froide est plus faible. Durant cette phase transitoire E2, le COP de la pompe à chaleur est plus élevé, de l'ordre de 5 et la consommation du compresseur 18 est moindre, de l'ordre de 2 kWh par kilogramme de dihydrogène. En conséquence, la consommation moyenne en électricité du système conforme à l'invention au niveau de la compression et de la pompe à chaleur est de l'ordre de 2,5 kWh par kilogramme de dihydrogène comprimé de 30 bars à 450 bars.

A titre de comparaison, un compresseur mécanique consomme de l'ordre de 3,3 kWh pour comprimer un kilogramme de dihydrogène de 30 bars à 450 bars. Le système combiné de production- compression de dihydrogène conforme à l'invention permet donc de diminuer largement la consommation électrique de la partie compression par rapport à la compression mécanique de l'état de la technique. Ladite diminution représente une baisse de l'ordre de 24 %.

Procédé de préchauffage du dispositif de compression à hydrures métalliques 12

Selon un mode de réalisation avantageux de l'invention représenté sur la Figure 4, le système comprend en outre une première conduite de dérivation 29 en parallèle du compresseur 18, une deuxième conduite de dérivation 30 en parallèle du détendeur 20 et une pompe de circulation 31 branchée sur une des conduites de dérivation 29 ou 30 qui assure la circulation du fluide caloporteur 16 lorsque ledit fluide caloporteur 16 se trouve dans les conduites de dérivation 29 et 30. Dans ce mode de réalisation, le système comporte également une unité de contrôle 32. Le dispositif de compression à hydrures métalliques 12 peut comporter deux unités de compression, chaque unité de compression pouvant comporter une ou plusieurs réservoirs. L'unité de contrôle 32 est configurée pour contrôler la dérivation du fluide caloporteur de sorte que, durant la phase E2 de chauffage du dispositif de compression à hydrures métalliques 12 et la phase E3 de désorption du dihydrogène dans le dispositif de compression à hydrures métalliques 12 :

- si la température du dispositif de compression à hydrures métalliques 12 est inférieure à une température seuil $T_S$, le fluide caloporteur 16 circule dans les conduites de dérivation 29 et 30,
- si la température du dispositif de compression à hydrures métalliques 12 est supérieure à la température seuil $T_S$, le fluide caloporteur 16 circule à travers le compresseur 18 et le détendeur 20.

La température seuil $T_S$ est comprise entre la température d'absorption $T_0$ du dispositif de compression à hydrures métalliques 12 et la température de désorption $T_1$. La température de désorption $T_0$ est préférentiellement égale ou légèrement supérieure à la température ambiante comprise entre 0 °C et 45 °C. La température seuil $T_S$ est préférentiellement comprise entre 50 °C et 100 °C. La température seuil $T_S$ est par exemple de l'ordre de la température au sein de l'électrolyseur 11.

Durant la première partie de la phase E2 de chauffage du dispositif de compression à hydrures métalliques 12, la température dudit dispositif 12 augmente jusqu'à atteindre la température seuil $T_S$. Tant que la température du dispositif de compression à hydrures métalliques 12 est comprise entre la température d'absorption $T_0$ et la température seuil $T_S$, le fluide caloporteur 16 circule dans les conduites de dérivation 29 et 30 de sorte à extraire au moins une partie de la chaleur générée par l'électrolyseur 11 et à transférer la au moins une partie de la chaleur générée par l'électrolyseur au dispositif de compression à hydrures métalliques 12 sans passer par le compresseur 18 qui est à l'arrêt. Le compresseur n'est alors pas alimenté en électricité. Durant cette période qui constitue une période de préchauffage du dispositif de compression à hydrures métalliques 12, l'évaporateur 17 et le condenseur 18 sont utilisés comme de simples échangeurs de chaleur, les échanges de chaleur n'impliquant pas forcément un transfert de phase du fluide caloporteur 16.

L'apport de chaleur au dispositif de compression à hydrures métalliques 12 lors de la période de préchauffage représentée sur la Figure 4 fait augmenter la température dudit dispositif 12 jusqu'à la température seuil $T_S$. Lorsque la température du dispositif de compression à hydrures métalliques 12 dépasse la température seuil $T_S$, le fluide caloporteur 16 est dévié pour circuler dans le compresseur 18 de sorte que le système conforme à l'invention fonctionne alors comme une pompe à chaleur tel que cela a été décrit ci-dessus en référence aux Figures 2 et/ou 3. Durant la fin de la période de chauffage E2, la pompe à chaleur permet d'augmenter la température du dispositif de compression à hydrures métalliques 12 jusqu'à atteindre la température de désorption $T_1$. Durant la phase de désorption du dihydrogène E3, la pompe à chaleur maintient le dispositif de compression 12 à la température de désorption $T_1$.

Durant la phase de préchauffage, la pompe de circulation 31 consomme environ 1 kWh par kilogramme de dihydrogène.

## Revendications

1. Système combiné de production et de compression de dihydrogène comprenant :

   - un électrolyseur (11) configuré pour produire du dihydrogène en dégageant de la chaleur,
   - un dispositif de compression à hydrures métalliques (12) configuré pour être chauffé par apport de chaleur lors de phases de chauffage (E2) et de désorption du dihydrogène (E3) et
   - un réseau d'acheminement du dihydrogène (13) depuis l'électrolyseur jusqu'au dispositif de compression à hydrures métalliques (12) configuré pour délivrer du dihydrogène (13) au dispositif de compression à hydrures métalliques lors d'une phase d'absorption de dihydrogène (E1),
   - **caractérisé en ce qu'**il comporte en outre un réseau caloriporteur (15) dans lequel circule un fluide caloporteur (16), ledit réseau mettant en connexion fluidique successivement un évaporateur (17), un compresseur (18), un condenseur (19) et un détendeur (20) et étant adapté pour qu'au moins une partie de la chaleur dégagée par l'électrolyseur (11) soit transmise au fluide caloporteur (16) au niveau de l'évaporateur (17) et qu'au moins une partie de l'apport de chaleur au dispositif de compression à hydrures métalliques (12) lors des phases de chauffage (E2) et de désorption du dihydrogène (E3) soit cédée par le fluide caloporteur (16) au niveau du condenseur (19).

2. Système selon la revendication 1, dans lequel l'évaporateur (17) est intégré à l'électrolyseur (11) et relie un circuit interne de refroidissement de l'électrolyseur au réseau caloriporteur (15), de sorte que le transfert de la au moins une partie de chaleur dégagée par l'électrolyseur (11) se fasse directement du circuit interne de refroidissement de l'électrolyseur (11) vers le fluide caloporteur (16).

3. Système selon la revendication 1, comprenant en outre un premier réseau de liaison (21) dans lequel circule un premier fluide de liaison (22), le premier réseau de liaison (21) raccordant un circuit interne de refroidissement de l'électrolyseur (11) et l'évaporateur (17), la au moins une partie de la chaleur dégagée par l'électrolyseur (11) transmise au fluide caloporteur (16) au niveau de l'évaporateur (17) étant transmise par l'intermédiaire du premier fluide de liaison (22) circulant dans le premier réseau de liaison (21).

4. Système selon l'une des revendications 1 à 3, dans lequel le condenseur (19) est intégré au dispositif de compression à hydrures métalliques (12) et relie le réseau caloriporteur (15) à un circuit interne de chauffage du dispositif de compression à hydrures métalliques (12), de sorte que le transfert de la au moins une partie de l'apport de chaleur au dispositif de compression à hydrures métalliques (12) se fasse directement du fluide caloporteur (16) vers le circuit interne de chauffage du dispositif de compression à hydrures métalliques (12).

5. Système selon l'une des revendications 1 à 3, comprenant en outre un deuxième réseau de liaison (24) dans lequel circule un deuxième fluide de liaison (25), le deuxième réseau de liaison (24) raccordant le condenseur (19) et un circuit interne de chauffage du dispositif de compression à hydrures métalliques (12), la au moins une partie de l'apport de chaleur au dispositif de compression à hydrures métalliques (12) étant cédée par l'intermédiaire du deuxième fluide de liaison (25) circulant dans le deuxième réseau de liaison (24).

6. Système selon l'une des revendications 1 à 5, dans lequel la chaleur dégagée par l'électrolyseur (11) est intégralement transmise au fluide caloporteur (16).

7. Système selon l'une des revendications 1 à 6, dans lequel l'apport de chaleur au dispositif de compression à hydrures métalliques (12) est intégralement transmis par le fluide caloporteur (16).

8. Système selon l'une des revendications 1 à 7, dans lequel le réseau caloriporteur (15) comporte en outre une première conduite de dérivation (29) en parallèle du compresseur (18) et une deuxième conduite de dérivation (30) en parallèle du détendeur (20) et une pompe de circulation (31) branchée sur la première conduite de dérivation (29) ou sur la deuxième conduite de dérivation (30), le système comportant une unité de contrôle (32) configurée pour contrôler la dérivation du fluide caloporteur de sorte que, durant les phases de chauffage (E2) et de désorption du dihydrogène (E3) dans le dispositif de compression à hydrures métalliques (12) :

  si une température du dispositif de compression à hydrures métalliques (12) est inférieure à une température seuil $T_S$, le fluide caloporteur (16) circule dans la première conduite de dérivation (29) et dans la deuxième conduite de dérivation (30),
si la température du dispositif de compression à hydrures métalliques (12) est supérieure à la température seuil $T_S$, le fluide caloporteur (16) circule à travers le compresseur (18) et à travers le détendeur (20).

9. Système selon la revendication 8, dans lequel la température seuil $T_S$ est comprise entre 50 °C et 100 °C.

10. Système selon l'une des revendications 1 à 9, dans lequel l'au moins une partie de l'apport de chaleur au dispositif de compression à hydrures métalliques (12) amène le dispositif de compression à hydrures métalliques (12) à une température comprise entre 100°C et 150 °C.

11. Système selon l'une des revendications 1 à 10, dans lequel le dispositif de compression à hydrures métalliques (12) comprend deux unités de compression connectées en série et dans lequel le condenseur (19) comprend deux unités de condensation montées en parallèle, au moins une partie d'un apport de chaleur à chacune des unités de compression étant cédée par le fluide caloporteur (16) au niveau de chacune des unités de condensation.

12. Système selon l'une des revendications 1 à 11, dans lequel le dispositif de compression à hydrures métalliques (12) comprend au moins une paire de réservoirs, les phases de chauffage (E2) et de désorption du dihydrogène (E3) d'un premier réservoir d'une paire de réservoirs correspondant aux phases de refroidissement (E4) et d'absorption de dihydrogène (E1) du deuxième réservoir de la paire de réservoirs.

13. Procédé de contrôle d'un système selon l'une des revendications 8 et 9 ou selon l'une des revendications 10 à 12 prise en combinaison avec la revendication 8, comprenant une étape de dérivation du fluide caloporteur (16) de sorte que, durant des phases de chauffage (E2) et de désorption du dihydrogène (E3) dans le dispositif de compression à hydrures métalliques (12) :

  si une température du dispositif de compression à hydrures métalliques (12) est inférieure à une température seuil $T_S$, le fluide caloporteur (16) circule dans les conduites de dérivation (29) et (30),
si la température du dispositif de compression à hydrures métalliques (12) est supérieure à la température seuil $T_S$, le fluide caloporteur (16) circule à travers le compresseur (18) et le détendeur (20).

**14.** Unité de contrôle d'un système combiné de production et de compression de dihydrogène, comprenant un processeur configuré pour mettre en oeuvre l'étape de dérivation du procédé selon la revendication 13.

**15.** Produit programme d'ordinateur comprenant des instructions qui, lorsque le programme est exécuté par un ordinateur, conduisent celui-ci à mettre en oeuvre l'étape de dérivation du procédé selon la revendication 13.

FIG. 1

FIG. 2

## FIG. 3

## FIG. 4